(19) Europäisches Patentamt
European Patent Office
Office européen des brevets

(11) EP 1 114 585 A2

(12) EUROPEAN PATENT APPLICATION

(43) Date of publication:
**11.07.2001 Bulletin 2001/28**

(51) Int Cl.7: **A01N 47/44**, A61L 2/16
// (A01N47/44, 33:20)

(21) Application number: **00403554.9**

(22) Date of filing: **15.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **24.12.1999 KR 9962124**

(71) Applicant: **SK Corporation**
**Seoul 110-110 (KR)**

(72) Inventors:
- **Lim, Kwang-Min**
  **Taejon 305-390 (KR)**
- **Song, Won-Seong**
  **Taejon 305-390 (KR)**
- **Lee, Sang-Soo**
  **Taejon 305-390 (KR)**
- **Ju, Hong-Shin**
  **Taejon 305-390 (KR)**

(74) Representative: **Boulinguiez, Didier**
**Cabinet Plasseraud**
**84, rue d'Amsterdam**
**75440 Paris Cedex 09 (FR)**

# (54) Sterilization composition and method of using the same

(57) Disclosed is a sterilizing agent that is little toxic to the body and non-corrosive to metal with superiority in the rapid action and persistency of germicidal activity, comprising polyhexamethyleneguanidine phosphate and 2-bromo-2-nitro-1,3-propanediol, represented by the following formulas I and II, respectively, at a weight ratio of 1:1 to 20:1 polyhexamethyleneguanidine phosphate:2-bromo-2-nitro-1,3-propanediol.

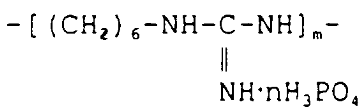 (I)

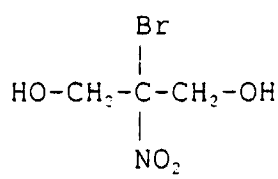 (II)

wherein m is an integer of 4 to 7 and n is an integer of 1 to 14.

EP 1 114 585 A2

## Description

BACKGROUND OF THE INVENTION

1. Field of the invention

The present invention relates to a sterilizing composition which is safe to the body and non-corrosive to metal equipment with superiority in the rapid action and persistency of germicidal activity. More particularly, the present invention relates to the synergistic activity of a combination of two germicidally active ingredients, polyhexamethyleneguanidine phosphate (hereinafter referred to as "PHMG") and 2-bromo-2-nitro-1,3-propanediol (hereinafter referred to as "bronopol"). Also, the present invention pertains to use of the sterilizing composition in food production facilities and kitchens.

2. Description of the Prior Art

Nowadays, there are developed and commercialized a great variety of prepared or processed foods. For the most part, these prepared or processed foods are produced and transported on a large scale. The hygienic management of these foods during their production and transportation is, therefore, very important for national health.

Processed or prepared foods are reported to be a majority of the foods which are circulated in the market. Accordingly, measures must be taken to inhibit the growth or proliferation of microorganisms during the processing of the foods. For food safety, as a matter of rule, foods are directly heated to kill the microorganisms thereon or therein or sterilizing agents are used to inhibit the direct or indirect introduction of microorganisms from the environment into foods. In order to keep the environment for food processing sanitary, sterilization must be carried out for processing equipments, surfaces of vessels, workers' hands, the atmosphere, etc. To this end, environmental sterilizing agents are usually employed.

Representative of the damages caused when food sanitation is problematic are food deterioration and poisoning. Food poisoning occurs when persons eat foods contaminated with *Salmonella* spp. or *Staphylococcus* spp., giving a significant damage to the health or even to the life of them. The food deterioration results from the putrefaction caused by microorganisms, incurring an economical loss.

Conventionally used are chlorine-based sterilizing agents, which are of excellent germicidal activity, but suffer from many disadvantages. One of the worst problems chlorine-based sterilizing agents have is strong irritation to the eye, skin and olfactory nerves of human. Thus, chlorine-based sterilizing agents are not beneficial or may be detrimental to the health of the workers. Along with this solicitude about health, the strong irritation makes the workers evade the use of the agents. So, the chlorine-based agents tend to be not used even in the working places which should be treated with sterilizing agents. In addition, since the irritative smell of chlorine-based sterilizing agents keeps long, they are not suitable for being sprayed for the disinfection of airborne germs. If the disinfection of airborne germs is not implemented, effectiveness is not brought about in preventing the infection of germs into foods. In result, only a short period of time must be assigned for the marketing-allowable period of the foods, incurring a significant economical loss.

Bronopol, a sterilizing agent, is known to be of high persistency of germicidal activity, but may give an odor when being used at high concentrations, e.g., when being used alone. This sterilizing agent has disadvantages of being slightly poor in the rapid action of germicidal activity and high in production cost.

SUMMARY OF THE INVENTION

Leading to the present invention, the intensive and thorough research on sterilizing agents, repeated by the present inventors aiming at the applicability for food preparation, resulted in the finding that PHMG is non-toxic to the body and non-corrosive to metal with the rapid action of germicidal activity and can exert a synergistic effect in combination with bronopol.

Therefore, it is an object of the present invention to overcome the above problems encountered in prior arts and to provide a sterilizing agent which has excellent rapid action of germicidal activity and maintains germicidal activity for a long period of time with safety.

It is another object of the present invention to provide use of the sterilizing agent as a germicidal abluent for food production facilities and kitchens.

In accordance with the present invention, there is disclosed a sterilizing agent, comprising polyhexamethyleneguanidine phosphate and 2-bromo-2-nitro-1,3-propanediol, represented by the following formulas I and II, respectively, at a weight ratio of 1:1 to 20:1 polyhexamethyleneguanidine phosphate:2-bromo-2-nitro-1,3-propanediol.

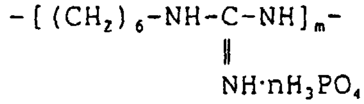 (I)

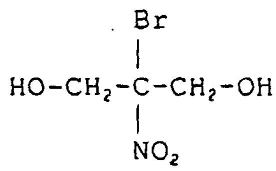 (II)

wherein m is an integer of 4 to 7 and n is an integer of 1 to 14.

In accordance with another embodiment of the present invention, there is provided the use of the sterilizing agent as a germicidal abluent for food production facilities and kitchens.

DETAILED DESCRIPTION OF THE INVENTION

The present invention is directed to a sterilizing agent comprising PHMG and bronopol.

A detailed description will be given of the present invention in the following aspects.

1. Working Safety

Superior as they are in germicidal activity, chlorine-based sterilizing agents, which are now predominantly used for the food industry, have significant disadvantages. For example, they are strongly irritative to the body, especially, the eye, the skin and the olfactory nerves. In addition, the chlorine-based agents are corrosive to metals or clothes, so that care must be taken in handling them. When being exposed to the chlorine-based agents for a long period of time, clothes, equipments or apparatuses are bleached. Further, their germicidal activity is weakened under alkaline conditions and, especially, is exhibited to be reduced rapidly in the presence of organic matters. Therefore, the chlorine-based agents are problematic in being applied for food production facilities. In contrast, PHMG is free of almost all of the problems from which the chlorine-based sterilizing agents suffer. For example, PHMG does not irritate the workers, nor gives an intensive odor, nor is corrosive. Also, PHMG does not cause bleaching or decolorization of clothes or equipments. This sterilizing compound is stable to pH changes except strong alkaline conditions. What is better, PHMG exerts excellent germicidal activity irrespective of the presence of organic matters. With these advantages, PHMG is suitable for use in food production facilities.

The comparison between chlorine-based sterilizing agents and PHMG is summarized in Table 1, below.

TABLE 1

| Comparison Between Chorine-Based Agents and PHMG | | |
|---|---|---|
| Properties | Chlorine-Based Agents | PHMG |
| Irritation | very irritative | hardly irritative |
| Odor | intensive | none |
| Corrosion | corrosive to metals/ clothes | none |
| Bleach/ Decolorization | bleach clothes and decolorize equipments | none |
| Influence of pH/ Organic Matters | poor in activity under alkaline condition and very poor.on organic matters | poor in activity only under strong alkaline condition and active on organic matters |

2. Applicability for the Disinfection of Airborne Germs

As mentioned earlier, it is very important to disinfect airborne germs in food production facilities. Although

foods themselves are thoroughly sterilized, food deterioration or poisoning may occur if the atmosphere of the production facilities is not sterilized. That is, the sterile foods may be contaminated with the germs which float in the atmosphere. Indeed, the number of the germs found in foods very largely varies depending on whether the atmosphere is sterilized completely. The air sterilization has a great influence on the marketing-allowable period (distribution period) of the food. The foods contaminated with germs have to be shorter in marketing-allowable period than do those uncontaminated.

In order to control airborne germs, it is typical that liquid sterilizing compositions are periodically sprayed by means of sprayers which stand scattered in'the working place. Conventional chlorine-based sterilizing agents are not suitable for spraying owing to their intensive irritation. For the disinfection of airborne bacteria or germs, thus, there is required a sterilizing agent which is non-irritative to the eye or olfactory nerves. PHMG is suitable for this purpose. When PHMG was once applied by spraying, general germs were found to be detected at a level reduced to one-tenths to one-hundredths.

It is very important to maintain airborne germs at as low a level as possible in production facilities for foods or medicines. In this regard, bio-clean rooms are usually installed. Such bio-clean rooms must meet the requirement for the cleanliness established by National Aeronautics and Space Administration (NASA) as shown in Table 2, below. This table confirms the importance of the controlling of airborne germs in food production facilities.

TABLE 2

| Cleanliness of Clean Rooms According to Industries | | |
|---|---|---|
| Industries | Working Process | Cleanliness (class*) |
| Foods | Ham, Sausage Packaging | 10,000 |
| | Milk Filling, Powdered Milk Drying | |
| | Yogurt, Carbonated Beverage Filling | |
| | Fruit juice Filling | |
| | Ice cream Packaging | |
| | Butter, Margarine Packaging | |
| | Plastic Vessel Molding | |
| | Pastry, Raw cream Producing | |
| Pharmaceutics | Serum Ample, dispenser | 100 |
| | Germ-Free Lab. | 10,000 |
| | Sanitary Pad Producing & Packaging | 100-10,000 |
| | Cosmetics Filling & Packaging | |
| Agriculture | Peach Blossoms | 10,000-100,000 |

* Class numbers represent the maximal numbers of microparticles (dust, germs) 0.5 μm in size which are allowed in 1 $ft^3$.

3. Synergistic Effect of Sterilizing Composition

The present invention is featured in that an improvement can be brought about in germicidal activity when PHMG is combined with bronopol. When the two sterilizing ingredients are combined, better germicidal activity can be elicited even at lower amounts of the resulting composition than when they are used, alone. Therefore, the sterilizing combinations can be produced at lower costs with higher safety to the body.

4. Other Technical Properties

In addition to exhibiting excellency in the rapid action of germicidal activity, PHMG has an advantage of being not corrosive. Thus, this sterilizing agent is not detrimental to the health of humans as well as to the metals of apparatuses. In other words, PHMG can be very effectively applied where metal apparatuses or pipes are employed. For

example, if corrosive sterilizing agents are used in food production facilities for a long period of time, their metallic apparatuses and pipes become short-lived. Such life span reduction is true of cooling towers, which circulate cooling water, when corrosive sterilizing agents are employed to control the slime formed in the equipment. Therefore, a sterilizing composition comprising PHMG can exhibit high germicidal activity with far less corrosivity, thereby producing great economical favor.

In accordance with the present invention, PHMG is combined with bronopol at a weight ratio of 1:1 to 20:1 PHMG:bronopol. When the weight ratio of PHMG to bronopol is below 1 or over 20, desirable synergistic effects of germicidal activity are not obtained.

To be applied to food production facilities or kitchens, the sterilizing composition of the present invention may be used in combination with cleaning agents for food production facilities or kitchens. Also, the sterilizing composition of the present invention may be used as a slime-removing agent to kill bacteria and fungi.

A germicidal abluent for use in food production facilities or kitchens may be obtained by mixing 85 to 95 wt% of an abluent and 15 to 5 wt% of the sterilizing composition of the present invention and diluting the mixture 100 to 500 folds in water.

A better understanding of the present invention may be obtained in light of the following examples which are set forth to illustrate, but are not to be construed to limit the present invention.

EXAMPLE 1

Preparation of Germicidal Disinfecting Composition

A 10 wt% solution of PHMG in water was mixed with an equal weight of a 1 wt% solution of bronopol in water and the mixture was diluted 50 folds in water to give a sterilizing composition. The dilution factor may be increased or decreased depending on the pollution degree of the place where the sterilizing composition is to be applied.

EXAMPLE 2

Sterilizing Process against and Effect on Airborne Germs

Automatic sprayers were installed (at three sites) in a material compounding room (about 200 $m^2$) of a food production facility and the germicidal disinfecting composition prepared in Example 1 was sprayed through the automatic sprayers three times (4 hours interval) a day for a month with a spray continuation of 10 min per round. The numbers of general bacteria and fungi were monitored for the month in a gravity slide method for microorganisms. In this regard, the germs were collected for 3C min on open plate media with a diameter of 10 cm. The monitoring results are given in Table 3, below. As indicated in Table 3, the number of germs was rapidly decreased until 5 days after the spraying of the germicidal disinfecting composition and, from then, was kept at low levels which were in a gradually decreasing tendency.

TABLE 3

| Change in Germ Population After Spraying of Germicidal Disinfecting Composition | | | | | | | |
|---|---|---|---|---|---|---|---|
| Germs | Periods of Time (Days) | | | | | | |
| | 0 | 1 | 2 | 5 | 10 | 20 | 30 |
| Bacteria | 872 | 453 | 189 | 112 | 93 | 66 | 36 |
| Fungi | 756 | 637 | 261 | 96 | 74 | 64 | 47 |
| note)the number means numbers of microorganisms per plate medium | | | | | | | |

EXAMPLE 3

Preparation of Germicidal Abluent for Food production facility and Sterilizing Process

Cleaning is a very important process in food production facilities, but microorganisms are difficult to kill only by cleaning. In this respect, a germicidal agent is helpful in improving the disinfection efficiency.

In 90 wt% of an abluent for processing equipments, 7 wt% of PHMG and 3 wt% of bronopol were completely dissolved. For use, this solution was diluted to a 0.5 wt% solution in water.

In order to identify the sterilizing effect of this germicidal abluent, there was counted the number of the germs detected from a surface which had been treated with the germicidal abluent. For comparison, an ordinary abluent was

used as a control. With regard to the germ detection, Contact Slide, a commercial product in which microorganisms are allowed to stick to and grow on a medium in direct contact with a flat plate, was used. After being taken, microorganisms were cultured at 37 °C for three days to count their numbers. The results are given in Table 4, below.

TABLE 4

| Numbers of Microorganisms Detected After Treatment with Germicidal Abluent and Abluent Alone | | | | |
|---|---|---|---|---|
| | Surfaces Treated with | | | |
| | Abluent Only(A) | | Germicidal Abluent (B) | |
| | Befcre Cleaning | After Cleaning | Before Cleaning | After Cleaning |
| Germ Nos. (cfu) | 274 | 36 | 288 | 3 |

As apparent from Table 4, a much better improvement was brought about in the decrease in the number of microorganisms when treating with the germicidal abluent than with an abluent alone. The availability of the germicidal abluent for use in food production facilities indicates that it can also be applied to kitchens.

EXAMPLE 4

Synergistic Effect of Germicidal Disinfection Composition

A measurement was made of the synergistic effect of the germicidal activity of the composition as follows. First, each of the sterilizing ingredients was measured for its minimal growth-inhibitory concentration (MIC) against *Pseudomonas aeruginosa* and *Aspergillus niger.*

Advantage was taken of the MIC values to calculate fractional concentration index (FIC) values according to the following mathematical equation when the ingredients were used in a combination.

$$FIC\ Index = \frac{a}{a_1} + \frac{b}{b_1}$$

Wherein

$a_1$ is an MIC of A antibiotics when it is used alone,
$b_1$ is an MIC of B antibiotics when it is used alone,
a is an MIC of A antibiotics when it is used in combination with B antibiotics, and
b is an MIC of B antibiotics when it is used in combination with A antibiotics. (A: PHMG, B: Bronopol)

When the FIC value was calculated as being larger than 1, the ingredients were aecermined to show antagonistic activity against each other. FIC values smaller than 1 mean that the ingredients are of synergistic activity. The results are given in Table 5, below.

TABLE 5

| Germs | MIC | | | | FIC |
|---|---|---|---|---|---|
| | $a_1$ | $b_1$ | a | b | |
| *P. aeruginosa* | 64 | 32 | 21.3 | 10.6 | 0.67 |
| *A. niger* | 256 | 128 | 16 | 16 | 0.19 |

As shown in Table 5, when the two ingredients were combined, great synergistic effects were obtained (FIC<1).

EXAMPLE 5

Comparison in Rapid Action and Persistency of Antibiotic Activity Among Sterilizing Agents

A feature of PHMG resides in the excellency in the rapid action of germicidal activity. For the rapid action and persistency of germicidal activity, the germicidal disinfecting composition prepared in Example 1, PHMG alone, and a

conventional water-soluble germicidal agent (Kathon, Rohm&Haas) were compared and the results are given in Table 6, below.

TABLE 6

| Rapid Action and Persistency of Germicidal Activity | | | | | | |
|---|---|---|---|---|---|---|
| (unit: cfu) | | | | | | |
| Time (hrs) | Sterilizing Agents | | | | | |
| | No Agents | PHMG | | Kathon (Rohm&Haas) | | PHMG+ Bronopol |
| | 0 ppm | 50ppm | 100ppm | 50ppm | 100ppm | 25ppm |
| 0 | 790 | 790 | 790 | 756 | 765 | 1,000 |
| 3 | 868 | 0 | 0 | 820 | 495 | 0 |
| 6 | 1,22 | 0 | 0 | 420 | 273 | 0 |
| 24 | 18,120 | 86 | 0 | 0 | 91 | 0 |
| 48 | 132,000 | 1,876 | 16 | 6 | 1 | 0 |

As indicated in Table 6, a satisfactory germicidal effect was obtained from the conventional agent 24 hours later while PHMG showed excellent germicidal activity only 3 hours later. In other words, PHMG is far superior to the conventional agent in rapid action. However, growth of microorganisms was partially resumed after 48 hours, indicating the poor persistency of PHMG. On the other hand, no germs could be found even after 48 hours when the mixture of PHMG and bronopol was used. Consequently, the germicidal disinfecting composition of the present invention kills microorganisms at a high efficiency within a short time as well as sustains this germicidal effect for a long period of time, so that it can be used to effectively control germs in, for example, food production facilities.

As described hereinbefore, the germicidal disinfecting composition of the present invention is not irritative, giving the advantage of being safe to the workers'. Thus, the germicidal disinfecting composition of the present invention surmounts the hesitation of the workers to use germicidal agents in their working places, for example, food production facilities, allowing the places to be maintained clean. In result, the number of the germs which happen to be introduced to foods can be undoubtedly reduced to prolong their marketing-allowable periods, thereby making an economical profit. Of course, such less polluted foods are more advantageous to the health of the consumers.

In addition, with superiority in the rapid action and persistency of germicidal activity, the germicidal disinfecting composition of the present invention generates resistant mutants at a low level and is of effective germicidal activity against a broad spectrum of germs, including bacteria and fungi. Further, the germicidal disinfecting composition is advantageous in that it is synergistically so active that useful effects can be obtained with less amounts, thereby bringing about an improvement in the cost.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. A sterilizing composition, comprising a mixture of polyhexamethyleneguanidine phosphate, represented by the following formula I:

$$-[(CH_2)_6-NH-\underset{\underset{NH\cdot nH_3PO_4}{\|}}{C}-NH]_m- \qquad (I)$$

wherein m is an integer of 4 to 7 and n is an integer of 1 to 14; and 2-bromo-2-nitro-1,3-propanediol, represented by the following formula II:

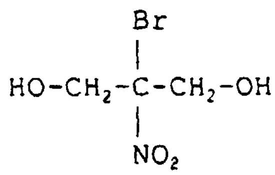

(II)

at a weight ratio of 1:1 to 20:1 polyhexamethyleneguanidine phosphate:2-bromo-2-nitro-1,3-propanediol.

**2.** Use of the sterilizing agent of claim 1 as a germicidal abluent for food production facilities, the sterilizing agent being in combination with a cleaning agent for food production facilities.

**3.** Use of the sterilizing agent of claim 1 as a germicidal abluent for kitchens, the sterilizing agent being in combination with a cleaning agent for kitchens.